Europäisches Patentamt

European Patent Office

Office européen des brevets

(19)

(11) **EP 0 691 766 A1**

(12) # EUROPEAN PATENT APPLICATION

(43) Date of publication:
10.01.1996 Bulletin 1996/02

(51) Int. Cl.6: **H04L 9/32**

(21) Application number: 95201809.1

(22) Date of filing: 03.07.1995

(84) Designated Contracting States:
AT BE CH DE DK ES FR GB GR IE IT LI LU NL PT SE

(30) Priority: 05.07.1994 NL 9401121

(71) Applicant: **Koninklijke PTT Nederland N.V.**
**NL-2509 CH The Hague (NL)**

(72) Inventors:
• Pieterse, Rob
  NL-2111 ZL Aerdenhout (NL)
• De Raad, Andries Adrianus
  NL-2411 GM Bodegraven (NL)
• Van Tilburg, Johan
  NL-2751 SR Zoetermeer (NL)
• Roos van Raadshoven, Leonard Antonius
  NL-2724 VS Zoetermeer (NL)
• Roelofsen, Gerrit
  NL-2411 GM Gouda (NL)

(54) **Enciphering of dialing information based on previous verification step**

(57) The invention provides a method for protecting a transmission line between a first station and a second station, via which transmission line signalling information, such as dialling information, and/or user information, such as voice, can be transferred. The method comprises a verification step (I) in which the identity of the second station is verified on the basis of challenge response, and a signalling (III) step in which signalling information, such as dialling digits, are transferred via the transmission line in an enciphered manner. In this context, enciphering of the signalling information occurs on the basis of cipher information, which is transferred during the verification step. Preferably, only the signalling information is enciphered and between the verification step (I) and the signalling step (III) a transition step (II) is carried out in which, inter alia, an additional verification takes place. The invention further provides a device and a system in which the method is used.

Fig. 3

**Description**

BACKGROUND OF THE INVENTION

The invention relates to a method for protecting at least one transmission line, a device for carrying out the method and a system in which the method is used.

More particularly, the invention relates to a method for protecting a transmission line between a first station and a second station, over which transmission line signalling information and/or user information can be transferred. In this context, the first station may for example be a telephone exchange or be coupled thereto; whereas the second station may be formed by a subscriber station or another telephone exchange. In this context, a telephone exchange may also include a switching station, substation, etc; whereas a subscriber station need not only comprise a point of connection, for example, for a telephone apparatus, a facsimile apparatus and/or viewphone, but can also be a private branch exchange and/or possible interposed apparatus. The signalling information (such as connection set-up information for setting-up a connection) can, in this context, comprise dialling information; whereas the user information may, for example, contain voice information (digital or analog) and/or digital information from (facsimile) apparatus.

With transmission lines, ever more often the problem arises that these connections are "broken into": a non-authorised user intercepts the communication between the first station and the second station and wiretaps this or even uses the connection for his own purposes. Such an "intruder" can, for example, add his own signalling information (such as dialling information) to the connection in order to set up a further connection, however, without having the expenses of the further connection assigned to him.

It is known per se to detect illegitimate users of telephone lines by superposing a signal, for example, a high frequency signal on the voice signal when these lines are being used by a (legitimate) subscriber. Illegitimate users who do not generate this additional signal can therefore be recognised as such. In some cases, however, this kind of protection can be circumvented by illegitimate users when they also generate such a signal.

It is furthermore known to encipher both analog and digital information flows (see for example references [1] and [4] below). However, enciphering, transferring and then deciphering both user information and signalling information is relatively complicated and time-consuming; therefore it requires relatively complicated apparatus and can cause delay in user information.

Reference [5] discloses the use of cryptographic techniques to prevent the illegitimate use of mobile and cordless communications equipment. The techniques discussed include the use of a random challenge and encryption of such a challenge by means of a unique key in order to verify the authentication of a mobile unit. The reference does, however, not deal with fixed (i.e. non-mobile) communication, nor with the problem of "hacking" (intruding) transmission lines, such as subscriber lines. Furthermore, the reference suggests to encrypt all data, including the speech data, thus making the actual communication more complicated and time-consuming.

SUMMARY OF THE INVENTION

The object of the invention is to eliminate above and other disadvantages of the prior art and to provide a method with enables monitoring a transmission line, especially a subscriber line, in a reliable manner without causing side effects objectionable to the user. The invention further aims at providing a method which enables checking the authentiticy of a station, such as a subscriber station, independently of the integrity of the transmission line. The invention further aims at providing a method which enables transferring of the signalling information, such as dialling information, in an enciphered manner so that said information remains secret to third parties.

In accordance with the invention a method of the kind mentioned in the preamble to this end is characterised by a verification step in which the identity of the second station is verified, and a signalling step in which signalling information is transferred over the transmission line in an enciphered manner, with the enciphering of the signalling information occurring on the basis of cipher information, which is transferred over the transmission line during the verification step. In doing so it is attained that it is unfeasible for an "intruder" to choose a connection himself, as this intruder will not be able to cipher said signalling information, or at least not in the correct manner. Enciphering or encoding the signalling information, and the corresponding deciphering or decoding in the other station, after all, results in the non-enciphered signalling information of an intruder being "deciphered" and as a consequence becoming useless. By transferring the cipher information, during the verification step, not only an efficient use of the device is attained, but care is also taken that the transfer of the cipher information can be checked on the basis of the result of the verification. Moreover, transferring signalling information in an enciphered manner can occur in different signalling steps with different cipher information. Advantageously, between subsequent signalling steps a further verification step is present, as a result of which an additional protection is obtained.

Therefore, in accordance with the invention a transmission line, particularly a communication line, is protected by processing, inter alia, signalling information in a cryptographic manner. During the verification step, which precedes the transfer of the signalling information (signalling step), in accordance with the invention, secret information, viz. cipher information is transferred over the transmission line. In particular cipher information can be transferred into two directions, so that between the respective stations cipher information (cryptographic data) is exchanged.

The verification step in principle, does not give a decisive answer about the integrity of the connection, as an active "intruder" can transfer all messages, and therefore all information which is being exchanged between the first station and the second station in an unchanged manner. Moreover, in the signalling step the signalling information is therefore transferred in an enciphered manner, with enciphering occurring on the basis of the information which is transferred in the verification step and which is, preferably, subsequently processed in a cryptographic manner.

Enciphering and deciphering both the user information and the signalling information delays the transfer of information between the stations. Preferably, the user information (such as voice) is therefore, contrary to the signalling information (such as dialling information), transferred in an unciphered manner. Although wiretapping the transmission line is still possible in this context, it is prevented effectively that third parties use the line for their own purposes.

Advantageously, the verification step is repeated when the transmission line is not engaged. Said repeating can, depending on the circumstances, occur periodically, for example every hour or every 24 hours. As a result of this, it can be established periodically whether the station coupled to the transmission line is indeed the (legitimate) subscriber station.

Preferably, during the verification step, a first number is transferred from the first to the second station, then said number is processed in a cryptographic manner in both the first and the second station, and the result is transferred as a second number from the second station to the first station, in which it is compared with the corresponding result of the first station. Such a "challenged signed response", known per se, is effective when verifying the authenticity of the users.

Advantageously, during the signalling step, subsequent parts of the signalling information are enciphered separately. By enciphering separately, preferably with other cipher information, the signalling information (such as dialling digits) it is prevented that the intruder, when deciphering part of the signalling information, is then also capable of deciphering the remaining part of the signalling information. Preferably, therefore for enciphering each part of the signalling information a new cipher word is determined.

In a preferred embodiment of the method in accordance with the invention between the verification step and the signalling step a transition step is carried out, in which a third number is transferred to the first station. As a result of this, an additional check on the authenticity of the user is obtained.

The method in accordance with the invention is preferably carried out in such manner that both in the first station and in the second station at least two cryptographic keys are present. By operating with several keys for each transmission line or at least for each second station, a larger cryptographic security is attained, since the chance that third parties know or can deduce both (secret) keys is drastically reduced. Advantageously, a key of a second station is unique. By using unique keys for a station, a further enhancement of the security is obtained, since a key, which is for example derived by cryptographic analysis or mechanical manipulation of a subscriber station, cannot be used in another subscriber station. For this purpose, the first station is provided with several keys, which correspond to the respective keys of the second stations coupled to the first station. Advantageously, the second stations (subscriber stations) are arranged in such manner that it is not possible for the respective user or users (such as subscribers) to change or read out the keys, as a result of which the keys form a "signature" of the user concerned, which "signature" can be used for verification purposes.

A very advantageous embodiment of the method in accordance with the invention is obtained if the at least one key of the second station is accommodated in an exchangeable card, a so-called "smart card". As a result of this, it is attained that a user can set-up a protected connection on several transmission lines. This can be advantageous if a user wishes to set up a connection via a second station not belonging to him, for example for conducting a telephone conversation or for listening to a telephone answering machine. If the at least one key of the second station is accommodated in an exchangeable card, said at least one key is preferably unique and associated to said user.

Advantageously, during insertion of such an exchangeable card in a second station, an identification code is transferred to the corresponding first station so that the first station, when protecting the respective transmission line, can use the correct keys which are associated to the user and identified by the card. Such a card can be provided with a micro-processor and a memory, of which at least a part of the memory, viz. that part in which the keys are stored, can not be read out externally so that the keys and possibly also the cipher functions remain secret.

Preferably, the first station comprises a telephone exchange and the second station a subscriber station, i.e a station (device) to which communication apparatus (telephone, facsimile apparatus) can be connected. However, it is also possible to use the method in accordance with the invention for the uninterrupted monitoring of alarm lines and for protecting feeder cables having one pair of conductors, so that not only an "intrusion" of the transmission line but also failures or broken leads can be detected.

A device for carrying out the method in accordance with the invention preferably comprises an input and output unit, a processor for carrying out cryptographic processing, and a memory coupled to the processor for storing therein a program for carrying out the method, said memory comprising at least one protected part for storing therein at least one cryptographic key. Such a device can advantageously be accommodated in a station for connecting a telephone apparatus, facsimile apparatus, computer, etc. thereto.

Advantageously the method in accordance with the invention is used in a system for monitoring transmission lines, with such a system being capable of being used in a telephone network.

REFERENCES

[1] W. Diffie & M.E. Hellmann: "Privacy and Authentication: An Introduction to Cryptography", Proceedings of the IEEE, Vol. 67, No. 3, March 1979.
[2] EP-0.018.129
[3] P. Horowitz & W. Hill, "The Art of Electronics", Cambridge, 1989.
[4] H. Baker & F. Piper, "Cipher Systems", London, 1982.
[5] M. Walker, "Security in Mobile and Cordless Telecommunications", Proceedings COMP-EURO 92, Los Alamitos, USA, May 1992.

EXEMPLARY EMBODIMENTS

The invention will hereinafter be elucidated with the reference to the figures.
Figure 1    diagrammatically shows a transmission line with a subscriber station and an exchange.
Figure 2    diagrammatically shows the transfer of information in the method in accordance with the invention.
Figure 3    diagrammatically shows possible sub-steps of the method in accordance with the invention with the operations carried out in the sub-steps.
Figure 4    diagrammatically shows a system for using the invention.
Figure 5    diagrammatically shows a device in accordance with the invention to be used in a station.

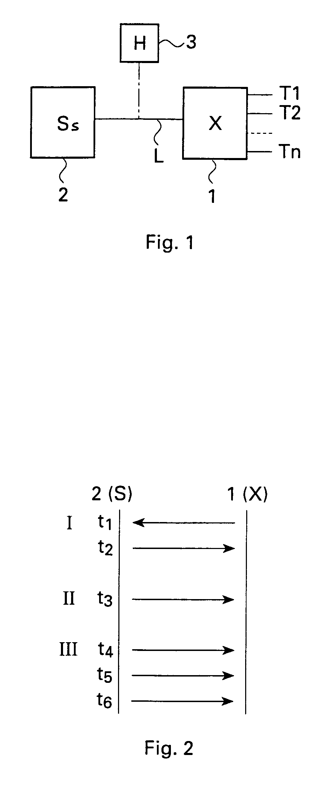

The transmission line L, shown in Figure 1, connects a first station 1 to a second station 2. In this context of the example shown, the first station comprises an exchange X; whereas the second station 2 comprises a subscriber station for a subscriber Ss which is coupled thereto but not separately shown in Figure 1. The transmission line L in Figure 1 is formed by a physical line, such as a telephone line, which is coupled to the stations 1 and 2. To the first station (exchange) 1 several further connections (for example trunk lines) T1, T2, ... are coupled, which can be selected from the subscriber station 2 in a known manner by transferring selection information to the exchange X.

Furthermore, Figure 1 shows a third station 3 with an "intruder" or illegitimate user H, who has contacted the line L. In that context, the illegitimate user H for example may have established an electromagnetic coupling with the transmission line L by means of a coil, or has established a direct electrical connection with the help of a connection terminal. The illegitimate user H can now also feed signalling information (such as dialling information) to the exchange X via the line L. Therefore, the invention provides a method for protecting the line L in such manner that feeding dialling information to the exchange X in an illegitimate manner can be detected and/or that this is made futile for the intruder as will be explained below in more detail.

One aspect of the method in accordance with the invention, viz. the at least in part two-way data transfer between first station and second station, is diagrammatically shown in Figure 2. In this context, the side of the first station, which can be coupled to an exchange (X), is indicated by 1 and the side of the second station, which can be coupled to a subscriber apparatus (Ss), is indicated by 2. The different steps, the method in accordance with the invention is preferably composed of, are indicated by I, II and III; whereas the subsequent points in time $t_1$, $t_2$, etc. are indicated below each other. The verification step I is preferably carried out when the transmission line between the first station and the second station (line L in Figure 1) is not used by the subscriber, i.e. when no user information or signalling information is transferred over the transmission line L. Advantageously, the verification step I is repeated periodically in order to be able to verify the authentiticy of the second station (subscriber station) periodically. The transition step II can advantageously be carried out the moment the subscriber wishes to set up a connection over the transmission line concerned; whereas during the signalling step III the transfer of connection set-up information (dialling digits) is carried out.

In the verification step, indicated by I in Figure 2, at the point in time $t_1$ a first cryptographic value is transferred from the first to the second station. Said value is processed in a cryptographic manner at both sides. At the point in time $t_2$, the result of this processing is sent from the second station to the first station in the form of a second cryptographic value. Subsequently, in the first station a verification is carried out, i.e. a comparison of the cryptographic results, with which the authentiticy of the second station can be established. After all, an intruder H (see Figure 1) will not possess the cryptographic process used or the keys used therein, so that he can not reproduce the result of the process, viz. said cryptographic values, on-line, i.e. during a (legitimate) connection. The first and second cryptographic values preferably are different in order to make it almost impossible, i.e. practically infeasible, that the two values can be imitated by third parties (intruders).

In the transition step, indicated by II in Figure 2, at the point in time $t_3$ a third cryptographic value is transferred from the second station to the first station. Said third value is verified in the first station, preferably by comparing the received cryptographic value with a corresponding cryptographic value determined in the first station. Preferably, said transferred third cryptographic value, as well as its counterpart in the first station, has already been determined in the verification step I in order to have the transition step II proceed more speedily, and the third value differs from the above-mentioned first and second values in order to prevent imitation. Subsequently, in the transition step new, cryptographic values can be determined which are internal to the stations, which values are used in the next step. The transition step II, which is preferably accommodated in the method in accordance with the invention, offers an additional verification the moment the subscriber wishes to set up a connection, and furthermore renews the used values of internal cryptographic variables of the stations. It will, however, be clear that said step is not necessary for carrying out the method in accordance with the invention and may be omitted if desired.

In the signalling step, indicated by III in Figure 2, at the point in time $t_4$ a fourth cryptographic value is transferred from the second station to the first station. Said fourth value preferably is an enciphered dialling digit, i.e. is processed in a cryptographic manner. In this context, it may be noted that the term "dialling digit" not only relates to digits, but also other to characters and to data which are relevant for dialling and setting up a connection (such as "#" and "*") Subsequently, at the points in time $t_5$, $t_6$, and possibly at other points in time not indicated in Figure 2, further dialling digits are transferred in a cryptographically processed form. In this context, new values of cryptographic variables are, preferably, determined in the stations each time for processing in a cryptographic manner the next digit to be used.

With the method in accordance with the invention it is therefore possible to check, possibly periodically, the authenticity of a subscriber station prior to setting-up of a connection, to verify said authenticity again the moment a connection is requested (picking up the receiver of a telephone), and to have the transfer of the connection set-up information occur in an enciphered manner, with subsequent dialling digits preferably being enciphered with different (internal) cryptographic values.

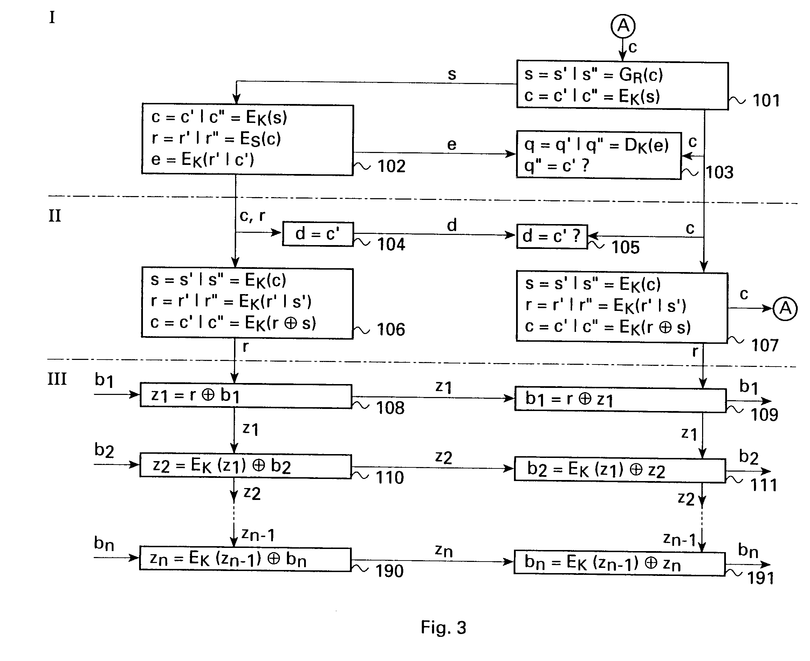

In Figure 3, a preferred embodiment of the method in accordance with the invention is given more in detail. As in Figure 2, the verification step I, the transition step II and the signalling step III are shown. The odd-numbered blocks, in this context, represent the sub-steps which are carried out in the first station (1 in Figure 1 and 2); whereas the even-numbered blocks represent sub-steps which are carried out in the second station (2 in Figure 1 and 2). The transfer of the cryptographic values s, e, d, $z_1$, etc., which hereinafter will be elucidated more in detail, respectively occurs at the points in time $t_1$, $t_2$, $t_3$, $t_4$, etc. indicated in Figure 2.

In sub-step 101 (of the verification step I) a value of a variable c is used, which has been determined in a preceding step A, for example an initialisation step. The (cryptographic) variable s in sub-step 101 ($s=G_R(c)$) receives a value, which is derived from the value of the variable c with a (pseudo) random number generator G and a key R. The variable s can, as well as most other variables, be assumed as being divided in a first part s' and a second part s". In this context, the first part s' can for example consist of the first i digits (bits) the variable s is composed of and the second part s" of the last j digits (bits), with the total number of digits (bits) amounting to $i+j+n$, and the number n possibly being zero. However, it is also possible that s" for example consists of all even digits (bits) and s' of all odd digits (bits). In Figure 3 the fact that the variable s can be assumed as being composed of s' and s" is represented by $s=s'|s"$.

The value of s obtained out of the random number generator G is transferred to the second station, in which said value is processed in sub-step 102. In sub-step 101 the value s obtained is enciphered with the help of a key-dependant cipher function E and a key K, which provides a new value of the variable c: $c=E_K(s)$. The function E, as well as the random number generator G, can be a function of a type known per se (see also ref. [1] and [4]). Analogous to s, c can also be assumed as being divided up into two parts: $c=c'|c"$. Said new value of c is used in the sub-steps 103 and 107.

In the second station, meanwhile a (new) value of c is determined from the value of s in sub-step 102 with the same cipher function E and the same key K. It will be understood that, if the key K and/or the cipher function E are secret, third parties (intruders) cannot form the new value of c. Preferably the key K is unique, so that only one second station (subscriber station) possesses said key and can form the corresponding value of c. In that context, the second station has to posses a collection of unique keys.

Subsequently in sub-step 102, a value of the variable r is determined with the help of the cipher function E and a second key S. By using a second key, preferably also unique for the concerning second station, an enhanced cryptographic security is obtained. The variable r can also be assumed as being divided up into a first and a second part: $r=r'|r"$. Subsequently, the combination of the first part of r and the first part of c is enciphered with the help of the cipher function E and the key K, which produces a value of the variable e. By combining two values obtained with different keys, and subsequently enciphering them, a further enlargement of the cryptographic security of the method is obtained. The values of r and c obtained in sub-step 102 are later-on used in the sub-steps 104 and 106; whereas the value of e is transferred to the first station and processed in sub-step 103.

In sub-step 103 a value of the variable q is determined by processing the transferred value of e with a decipher function D and the key K, with D being the inverse function of E so that: $D(e) = D(E(r'|c")) = r'|c'$ shall apply. Also q can be assumed as being divided up into a first and a second part: $q=q'|q"$. Subsequently, it is determined in sub-step 103 whether the second part of q is equal to the first part of c. If this is the case, the values of c' determined in the first station (in sub-step 101) and in the second station (in sub-step 102) are apparently the same, thus having ascertained the authenticity of the second station. It is noted that the equality of the said parts of c is only possible if the value of e is determined with the correct (authentic) keys K and S and the correct (authentic) cipher function E.

If the transition step II is processed, in sub-step 104 the value of the second part of c is assigned to the variable d, whereupon said variable d is transferred to the first station. There, in sub-step 105, it is verified whether d, i.e. a part of the variable c present in the second station, is equal to c", i.e. a part of the variable c present in the first station. If this test leads to a positive result, the authentiticy of the second station is confirmed and subsequently the sub-steps 106 and 107 are carried out. In case of a negative result the procedure can be stopped and the connection set-up can be refused, and if need be an alarm signal can be given. By only transferring part of the variable c in the form of d it is ensured, that possible third parties which wiretap the transmission line do not obtain the complete value of c. Comparing directly the values of c' in both stations (d=c'), without an intermediate decipher step (compare sub-step 103), has the advantage that the sub-step 105 can occur very rapidly, as a result of which setting-up a connection in the set-up step II can almost start immediately after a request for setting-up (for example picking up the receiver of a telephone apparatus).

The sub-steps 106 and 107 in both stations proceed in an identical manner. First a new value of s is determined by enciphering the actual value c (which was determined in respectively step 101 or 102) with the key K and the cipher function E. Subsequently, a new value of r is determined by enciphering the combination of the first part of the old value of r and the first part of the new value of s with the function E and the key K. Finally a new value of c is determined by first adding the new values of r and s modulo 2, indicated in Figure 3 by $r \oplus s$, and by enciphering the result with the function E and the key K. In the first station (sub-step 107) said new value of c is stored, indicated by A in Figure 3, in order to serve as a new initial value in case of a possible next verification step I. The new value of c is obtained by threefold enciphering and therefore is very reliable in a cryptographic respect. The values of r obtained in the sub-steps 106 and 107 are used respectively in the sub-steps 108 and 109.

During the transition step II therefore not only an additional verification is carried out in order to, before transferring the signalling information, verify once more the authentiticy of the second station, independent of the period of time elapsed since the latest verification in the verification step I, but also a preparation for the signalling step III is carried out by determining new values of r, as a result of which the extent of protection is further enhanced. As a preparation for a further verification step I a new (initial) value of c is determined.

In the signalling step III dialling digits $b_1$, $b_2$, ..., $b_n$ are transferred in an enciphered manner from the second station to the first station. In sub-step 108 the first dialling digit $b_1$ is added in digital form modulo 2 to the value of r (determined in sub-step 106), represented in Figure 3 by $z_1 = r \oplus b_1$. The value $z_1$ thus obtained is transferred to the first station and there, in sub-step 109, added modulo 2 to the value of r. As is known (see ref. [1]) for the addition modulo 2: $r \oplus r \oplus b_1 = b_1$ applies, so that said process gives the dialling digit $b_1$, provided that the value of r used in the second station (sub-step 108) is equal to the value of r used in the first station (sub-step 109). It will be clear that an intruder, not possessing (the correct value of) r, cannot transfer dialling digits in a meaningful manner, since an unciphered or incorrectly enciphered dialling digit is subjected to an addition (modulo 2) with r in sub-step 109 and thus will be made useless.

With the said addition modulo 2, a simple and quick but highly efficient enciphering of the dialling digits is obtained. It goes without saying that if the dialling digits are not processed in a digital form, another process can be used, for example, an addition in sub-step 108 and a substraction (modulo m, with m being an integer larger than one) in sub-step 109, or another processing in sub-step 108 and the correspondingly inverse process in sub-step 109.

The value of $z_1$ transferred from the second station to the first station preferably is in digital form and can comprise the entire number of bits of $z_1$. Advantageously, however, only a restricted number of bits of $z_1$ are transferred, for example four, with the modulo 2 additions in the sub-steps 108 and 109 being capable of being carried out with the four least significant bits of r.

The value determined in 109 of the dialling digit $b_1$, is handed over to for example an exchange or a further transmission line; whereas the values of $z_1$ determined in the sub-steps 108 and 109 are used respectively in the sub-steps 110 and 111.

In sub-step 110, a further dialling digit $b_2$ is received and enciphered into $z_2$ by a modulo 2 addition with a value derived from $z_1$. In principle, said derived value can be $z_1$ itself, but preferably said derived value is determined by enciphering $z_1$ with the function E and the key K, as is represented in Figure 3. As a result of this, a still larger reliability is obtained, partially due to the fact that subsequent dialling digits are enciphered with different values which themselves are not only dependant on internal variables, such as the variable r, but also on dialling digits, which for the method form external variables. As a result of this, the values $z_1$, $z_2$, etc. will differ for each digit, i.e. for each combination of dialling digits, even if the value of r would be the same for each signalling step III.

The value $z_2$ is transferred to the first station and, in sub-step III, is enciphered there by a modulo 2 addition with the value of $z_1$, also enciphered with the function E and the key K. After this, the enciphered value $b_2$ is delivered; whereas the value of $z_2$ is used in a further sub-step.

In the manner described above, the dialling digits of a digit are transferred in an enciphered manner from the second to the first station, with enciphering always occurring on the basis of the previously transferred enciphered value. If the last dialling digit $b_n$ in sub-step 191 has been delivered, the signalling step III has ended and the method may be resumed with the verification step I.

In the above it was assumed that the cryptographic values s, e, d, $z_1$, ... , $z_n$ are transferred over the transmission line L shown in Figure 1. However, it also possible that at least some of the variables mentioned, especially s, e and d, are transferred via another route, such as an additional transmission line or by radio.

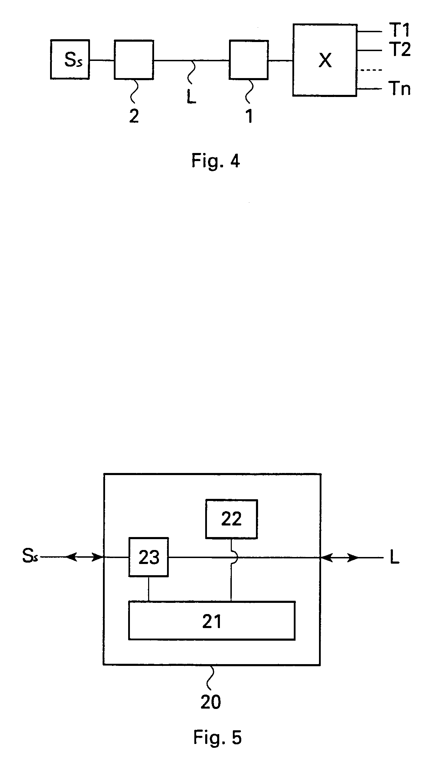

The system diagrammatically shown in Figure 4 comprises a first station 1 and a second station 2, which are coupled to a transmission line L. The first station 1 is connected to an exchange X and the second station 2 is connected to a subscriber Ss. As in Figure 1, the exchange possesses further transmission lines T1 ... Tn. The stations 1 and 2 are both formed by a device for carrying out the invention, as will be explained in further detail with reference to Figure 5. Advantageously, several transmission lines are connected to a first station 1, such as the transmission line L' shown in Figure 4, which connects a subscriber S' via a second station 2' to the first station 1. By providing a communication system, such as a telephone system, with stations 1 and 2 in accordance with the invention an effective protection and monitoring of the transmission lines L, L' etc. can be obtained.

The device 20 diagrammatically represented in Figure 5 for use in a first station (subscriber station) or second station (exchange) comprises a processor 21 for carrying out cryptographic processes with the help of a suitable program. The program is, as are the cryptographic variables and cryptographic keys, stored in a memory 22. Preferably the memory is provided with a protected part 22' (not shown), in which the keys can be stored in such manner that they cannot be changed or read-out. Advantageously such a protected memory part 22' is carried out in such manner that the information stored therein is erased when the device is manipulated, for example, forced open. The input and output device 23 takes care of the transfer of data, such as cryptographic values and dialling digits, between on the one hand the processor 21 and on the other hand the elements (transmission line and subscriber or exchange) connected to the device 20. The input and output device 23 can be designed in such manner that the connection between the elements connected is disrupted if during the verification or transition step of the method the verification of the authentiticy of a subscriber station is not successful. It can also be provided that in such a case a special signalling is delivered. With the help of said special signalling an alarm can be given.

The device 20 can be connected to a subscriber Ss and a transmission line L, as is shown in Figure 5, or to a transmission line and an exchange. The device 20 can consist of commercially available elements, but is preferably accommodated in an application-specific integrated circuit ("ASIC"). For implementing the device 20, the reader is referred to reference [3], which as reference [4] is assumed to be incorporated in this text.

The method in accordance with the invention, of which in the above an exemplary embodiment and a possible implementation are described, has as characteristic feature that during a first, "passive" phase (verification step) secret information is exchanged, which during a further, "active" phase (signalling step) are used for enciphering the signalling information.

With the method in accordance with the invention therefore, independent of integrity of the connection, a verification of the authenticity of the second station (for example a subscriber) is obtained; whereas it is avoided that an "intruder" can take over the connection after a successful verification. For this purpose, signalling information (such as dialling information) is transferred in an enciphered manner; whereas user information is preferably transferred in an unciphered manner. During the transfer of user information (for example a conversation) preferably no verification occurs so that the user information is not delayed and a relatively inexpensive implementation is made possible. With the help of the method in accordance with the invention non-authorised use of a connection can both be detected and prevented.

It will be understood for those skilled in the art that the invention is not restricted to the exemplary embodiments described and that many modifications and additions are possible without departing from the scope of the invention.

## Claims

1. A method for protecting a transmission line (L) between a first station (1) and a second station (2), over which transmission line (L) signalling information and/or user information can be transferred,
   <u>characterised by</u>

   - a verification step (I) in which the identity of the second station (2) is verified, and
   - a signalling step (III) in which signalling information is transferred over the transmission line (L) in an enciphered manner,

   with enciphering of the signalling information occurring on the basis of cipher information, which is transferred over the transmission line (L) during the verification step.

2. A method in accordance with claim 1, with user information being transferred in an unciphered manner.

3. A method in accordance with any of the preceding claims, with the verification step (I), when the transmission line (L) is not engaged, being repeated.

4. A method in accordance with any of the preceding claims, with, during the verification step (I) a first number (s) being transferred from the first (1) to the second station (2), said number being processed in a cryptographic manner in both the first and the second station, and the result of the second station being transferred as second number (e) to the first station (1), where it is compared with the corresponding result of the first station.

5. A method in accordance with any of the preceding claims, with, during the signalling step (III), consecutive parts of the signalling information ($b_1$, $b_2$, ...) being enciphered separately.

6. A method in accordance with claim 5, with, for the cipher process, a new cipher word ($E_K(z_1)$, $E_K(z_2)$,...) being determined from each part of the signalling information.

7. A method in accordance with any of the preceding claims, with, between the verification step (I) and the signalling step (III), a transition step (II) being carried out, in which a third number (d) is transferred to the first station (1).

8. A method in accordance with any of the preceding claims, with both in the first station (1) and the second station (2) at least two keys (K,R; K,S) being present.

9. A method in accordance with any of the preceding claims, with a key (K) of a second station (2) being unique.

10. A method in accordance with claim 9, with the at least one key (K; S) of the second station (2) being accommodated in an exchangeable card.

11. A method in accordance with any of the preceding claims, with the first station (1) comprising a telephone exchange (X) and the second station (2) a subscriber station (Ss).

12. A device (20) for carrying out the method in accordance with any of the preceding claims, comprising an input and output unit (23), a processor (21) for carrying out cryptographic processes, a memory (22) coupled to the processor for storing a program for carrying out the method, said memory (22) comprising at least one protected part for storing therein at least one cryptographic key.

13. A device in accordance with claim 12, with at least the protected part of the memory being accommodated in an exchangeable card.

14. A system for monitoring transmission lines, comprising at least two devices (20) in accordance with claim 12 or 13, with a first device being coupled to a first station (1) and a second device to a second station (2).

15. Telephone network, provided with a system in accordance with claim 14.

Fig. 1

Fig. 2

EP 0 691 766 A1

I

Ⓐ
$\downarrow$ c

$$s = s' \mid s'' = G_R(c)$$
$$c = c' \mid c'' = E_K(s)$$
~ 101

s →

$$c = c' \mid c'' = E_K(s)$$
$$r = r' \mid r'' = E_S(c)$$
$$e = E_K(r' \mid c')$$
~ 102

e →

$$q = q' \mid q'' = D_K(e)$$  c
$$q'' = c' ?$$
~ 103

II

c, r $\downarrow$

$$d = c'$$  ~ 104

d →

$$d = c' ?$$  c ←  ~ 105

$$s = s' \mid s'' = E_K(c)$$
$$r = r' \mid r'' = E_K(r' \mid s)$$
$$c = c' \mid c'' = E_K(r \oplus s)$$
~ 106

$$s = s' \mid s'' = E_K(c)$$
$$r = r' \mid r'' = E_K(r' \mid s')$$  c → Ⓐ
$$c = c' \mid c'' = E_K(r \oplus s)$$
~ 107

r $\downarrow$

r $\downarrow$

III   b1 →

$$z_1 = r \oplus b_1$$  ~ 108

z1 →

$$b_1 = r \oplus z_1$$  b1
~ 109

z1 $\downarrow$

z1 $\downarrow$

b2 →

$$z_2 = E_K(z_1) \oplus b_2$$  ~ 110

z2 →

$$b_2 = E_K(z_1) \oplus z_2$$  b2
~ 111

z2 $\downarrow$

z2 $\downarrow$

zn-1 $\downarrow$

zn-1 $\downarrow$

bn →

$$z_n = E_K(z_{n-1}) \oplus b_n$$  ~ 190

zn →

$$b_n = E_K(z_{n-1}) \oplus z_n$$  bn
~ 191

Fig. 3

Fig. 4

Fig. 5

EP 0 691 766 A1

**European Patent Office**

**EUROPEAN SEARCH REPORT**

Application Number

EP 95 20 1809

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | COMP-EURO 92, COMPUTERS SYSTEMS AND SOFTWARE ENGINEERING, PROCEEDINGS, May 1992 LOS ALAMITOS, USA, pages 493-496, XP 000344244 WALKER 'Security in Mobile and Cordless Telecommunications' * page 493, right column, line 7 - line 21; figure 1 * * page 494, left column, line 11 - right column, line 2 * * page 494, right column, line 47 - page 495, left column, line 1 * * page 495, right column, line 30 - line 33 * | 1,4, 10-15 | H04L9/32 |

TECHNICAL FIELDS SEARCHED (Int.Cl.6)

H04L
H04M

The present search report has been drawn up for all claims

| Place of search | Date of completion of the search | Examiner |
|---|---|---|
| THE HAGUE | 29 August 1995 | Bossen, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

12